# EUROPEAN PATENT APPLICATION

(11) **EP 4 254 306 A1**
(43) Date of publication of application: **04.10.2023**
(21) Application number: 23164913.8
(22) Date of filing: 29.03.2023
(51) Int. Cl.: G06T 1/20, G06T 1/40, G06T 11/40

(54) **CONTROL STREAM STITCHING FOR MULTICORE 3-D GRAPHICS RENDERING**

(30) Priority: 30.03.2022 GB 202204504
(71) Applicant: Imagination Technologies Limited, Kings Langley, Hertfordshire WD4 8LZ (GB)
(72) Inventor: LIVESLEY, Michael John, Edinburgh (GB); KING, Ian, Shenley (GB)
(74) Representative: Elkington and Fife LLP

(57) **Abstract**

A multicore graphics rendering system is disclosed, comprising a plurality of cores configured to implement tile-based deferred rendering of a stream of primitives. First cores are configured to perform geometry processing on groups of primitives. Each group of primitives is associated with a group index denoting its position in the stream of primitives. Each first core produces, as an output of the geometry processing, a set of tile control lists. Each tile control list produced by each first core describes the primitives processed by that first core that are present in the respective tile. Second cores are configured to perform fragment processing for one or more tiles. Each second core is configured to read, from a memory, the tile control lists produced for a given tile by the various first cores, and to stitch together these tile control lists to produce a combined tile control stream for the tile. The contents of the tile control lists are stitched together in the order defined by the group indices.

## Description

### BACKGROUND

In computer graphics, "rendering" is the process of converting a 3D model, describing a virtual scene, into one or more 2D images, representing a view of the scene from a specific viewpoint (or viewpoints). As this is a computationally intensive process, for typical virtual scenes, it is common to provide a hardware accelerator that is specialised in carrying out the necessary computations. This kind of hardware accelerator is known in the art as a graphics processing unit (GPU).

Different GPUs may have different hardware architectures, reflecting different strategies for carrying out the computations necessary for 3D rendering. One exemplary GPU uses a "tile-based deferred rendering" (TBDR) pipeline.

This approach separates the rendering process into two distinct stages. The first of these two stages - the geometry processing stage (or simply "geometry processing", for short) - involves processing geometry data that describes the 3-D model of the scene. The geometry data is transformed from the 3-D space into the 2-D coordinates of the image, based on the particular viewpoint to be rendered. The output of this stage is transformed geometry, which is stored in a "parameter buffer" in so-called "primitive blocks".

The fundamental operation in the geometry stage is to work out what primitive shapes fall within each tile. The primitives are most commonly triangles. These triangles join together to form objects. The triangles are described in terms of their vertices (corner points). Each vertex includes positional information (the location of the vertex) and can include additional information, for example, colour.

The geometry stage of a rendering operation begins when the GPU receives a draw call from an application driver. The draw call contains instructions for geometry processing tasks (in particular, what triangles to draw) and all of the information needed to carry out the geometry processing.

In the second stage, known as "fragment processing", the transformed geometry data is read from the parameter buffer and rasterised - meaning converted to fragments and mapped to pixels. The fragment processing stage converts the primitives into fragments through the rasterisation process. As part of this process, depth-testing is performed to determine what fragments are actually visible at each pixel (or each sample position, if there is not a one-to-one correspondence between sample positions and pixels). "Deferred rendering" refers to the fact that only when the system has determined what fragments are visible does the GPU proceed to run "fragment shader" programs on the visible fragments. The shader program retrieves texture data (containing colour information) for the relevant visible fragments. The shaded fragments are used to determine the pixel values to be displayed.

This deferred rendering approach has the benefit of avoiding running the texturing and shading process for surfaces (fragments) that will ultimately be hidden behind other fragments in the scene. Only the fragments nearest the virtual camera (i.e. viewpoint) need to be shaded.

"Tile-based" refers to the fact that the image to be rendered is subdivided into multiple rectangular blocks, or "tiles". More specifically, in the geometry processing stage, the transformed geometry can be split up, tile by tile, to create a set of tile lists indicating which primitives are present in each tile. The tiles can then be processed by the fragment shading stage substantially independently of one another. Fragment shading is performed for each individual tile, producing pixel (colour) values for the blocks of pixels in that tile.

The tile-based approach facilitates greater data locality. The set of geometry fragments in each tile is typically a small subset of the overall set of fragments. Therefore, the processing can be carried out with a much smaller memory allocation than if the whole image were to be processed in one pass.

Tiling can also facilitate parallel processing to some extent. In particular, because the texturing/shading can be performed independently for different tiles, the fragment shading for different tiles can be allocated to separate GPU cores, in a multicore architecture.

In order to reduce rendering time, it is desirable to process rendering tasks, including both geometry processing and fragment processing tasks, in parallel using a multicore GPU. In order to process a draw call in parallel, the rendering tasks contained within the draw call must be split up into smaller groups of tasks that can be processed on each core of the multicore system.

However, implementing rendering tasks in parallel creates significant new challenges because of the special nature of graphics rendering calculations. In particular, a GPU is required to respect the order in which rendering work is provided by the application driver. This is because, for certain types of graphics content, the final rendered image will depend on the order in which objects are rendered. In other words, if objects are rendered out of sequence, the final rendered image will be incorrect.

This is not a problem for a single rendering pipeline. Work will always exit the pipeline in the same order that it entered the pipeline; there is no danger of completing work out of sequence. However, in a parallel implementation, this inherent ordering is lost. When work is distributed between cores, it is generally not possible to predict accurately how long each piece of work will take each core to complete. When cores are processing, in parallel, work that was originally provided in a defined sequence, there is the possibility that the work will be finished out of the original sequence.

It would be desirable to implement rendering tasks in parallel, on a multicore GPU, in a manner that is efficient and yet also respects the requirement that primitives be rendered in the order that they were provided by the application driver.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A multicore graphics rendering system is disclosed, comprising a plurality of cores configured to implement tile-based deferred rendering of a stream of primitives. First cores are configured to perform geometry processing on groups of primitives. Each group of primitives is associated with a group index denoting its position in the stream of primitives. Each first core produces, as an output of the geometry processing, a set of tile control lists. Each tile control list produced by each first core describes the primitives processed by that first core that are present in the respective tile. Second cores are configured to perform fragment processing for one or more tiles. Each second core is configured to read, from a memory, the tile control lists produced for a given tile by the various first cores, and to stitch together these tile control lists to produce a combined tile control stream for the tile. The contents of the tile control lists are stitched together in the order defined by the group indices.

According to an aspect of the present disclosure, there is provided a multicore graphics rendering system, for example a multicore graphics processing unit, comprising:
a plurality of cores, configured to implement tile-based deferred rendering of a stream of primitives,
wherein first cores of the plurality are configured to perform geometry processing work, and second cores of the plurality are configured to perform fragment processing work,
wherein each first core is configured to process groups of primitives, to produce a set of tile control lists describing, for each of a plurality of tiles, the primitives processed by that first core that are present in that tile, each group being associated with a group index, the group indices defining the ordering of the groups in the stream of primitives,
each first core being configured to write the tile control lists, including the group indices, to a memory,
each second core comprising at least one rasterisation pipeline, each rasterisation pipeline comprising one or more processors configured to perform fragment processing for one or more of the tiles, wherein each rasterisation pipeline is configured to, for each tile to be processed by its one or more processors:
   read from the memory the tile control lists produced for that tile by the first cores; and
   stitch together the tile control lists, to produce a combined tile control stream for the tile,
   wherein the rasterisation pipeline stitches together the tile control lists in the order defined by the group indices.

According to this architecture, the second cores are responsible for reading and stitching together the various tile control lists produced by the first cores. This helps to improve the scalability of the design, by avoiding the need for (or at least reducing the burden on) any central hub that is responsible for coordinating all of the cores. As more (second) cores are added to the multicore system, they bring with them the ability to carry out fragment processing for a larger number of tiles in parallel. They also bring the ability to stitch together the input data (that is, the tile control streams) needed for the fragment processing. Stitching the tile control lists in the second cores can also help to utilise memory capacity and memory access bandwidth more efficiently. For example, the combined tile control streams need not be stored in the memory - they can be consumed directly by the one or more processors in each rasterisation pipeline. In other words, the present architecture has the benefit that the combined tile control streams can be assembled at the times and places where they are needed. In contrast, in a central hub architecture, the various combined tile control streams would need to be communicated from the central hub to the respective (second) cores performing the fragment processing work - or else would need to be saved to the memory, where they could be read by those second cores. Neither alternative scales well; the latter alternative in particular is liable to be slow and inefficient.

Each group consists of a contiguous series of primitives. The groups collectively contain all of the primitives the stream. The groups may be generated by dividing the stream into groups of successive primitives.

The first cores and second cores may be the same or different cores. Thus, at least some of the first cores may also be second cores and/or at least some of the second cores may also be first cores. In other words, a given core may be configured to perform geometry processing work, or may be configured to perform fragment processing work, or may be configured to perform both geometry processing work and fragment processing work.

The combined tile control stream for each tile may be provided by the rasterisation pipeline directly to the one or more processors. The combined tile control stream is preferably not stored to memory.

At least one of the second cores may comprise multiple rasterisation pipelines. This may facilitate greater parallelisation, in a multilevel hierarchy. That is, work can be divided between cores, and the work allocated to a core can be sub-divided between rasterisation pipelines.

At least one of the rasterisation pipelines may comprise multiple processors. This provides a further level of parallelisation. Note that the stitching is performed at the level of the rasterisation pipelines. That is, each rasterisation pipeline may comprise a single stitching unit, configured to stitch together the tile control lists for each tile to be processed by the multiple processors.

One of the first cores may comprise a geometry processing master unit, configured to split the stream of primitives into the groups of primitives, and assign the groups of primitives among the first cores. The geometry processing master unit may implement load balancing among the first cores. This may comprise one or both of: (i) assigning approximately equal amounts of geometry processing work to each first core; and (ii) assigning geometry processing work preferentially to first cores that have completed previously assigned geometry processing work.

Each of the first cores may comprise a geometry processing slave unit, configured to control the processing of the groups of primitives assigned to that core, to produce the respective set of tile control lists

One of the second cores may comprise a fragment shading master unit, configured to assign the tiles among the second cores. The fragment shading master unit may assign tiles to the second cores in arrays of neighbouring tiles. This can facilitate greater data locality, as adjacent tiles are more likely to depend on the same primitive data than arbitrarily selected tiles. Consequently, if primitive data is cached in one of the second cores, a cache hit is more likely when that core is processing a tile that is adjacent to one that it has already processed. The arrays may be two-dimensional arrays; for example, the fragment shading master unit may assign a 2x2 array of tiles to each second core.

The fragment shading master unit may implement load balancing among the second cores. This may comprise one or both of: (i) assigning approximately equal amounts of fragment processing work to each second core; and (ii) assigning fragment processing work preferentially to second cores that have completed previously assigned fragment processing work.

Each of the second cores may comprise a fragment shading slave unit, configured to control the fragment processing for the tiles assigned to that core. For example, the fragment shading slave unit of each second core may implement load balancing among multiple rasterisation pipelines of that second core. This may comprise one or both of: (i) assigning approximately equal amounts of fragment processing work to each rasterisation pipeline; and (ii) assigning fragment processing work preferentially to rasterisation pipelines that have completed previously assigned fragment processing work.

The second cores may be configured to execute a partial render, comprising performing fragment processing for primitives in a renderable range of groups, the renderable range starting with a starting group and ending with an ending group, wherein, before executing the partial render, geometry processing has been completed for every group ahead of the ending group in the ordering.

The starting group may be the earliest group in the ordering that has not yet been rendered - that is, for which fragment processing has not yet been performed.

Geometry processing for the ending group may be partially complete at the time of performing the partial render. In particular, the ending group may be the earliest group in the ordering for which geometry processing has not yet been completed. The partial render may include a leading portion of primitives of the ending group for which geometry processing has already been completed. A trailing portion of the primitives of the ending group may be excluded from the partial render.

Optionally: the primitives are described in primitive block data stored in the memory; the tile control lists contain pointers to the primitive block data, and the graphics rendering system is configured to free memory associated with portions of tile control lists and primitive block data that have been rendered in the partial render. This enables memory to be freed up, to be reused for storing the output of further geometry processing work.

Optionally, each first core maintains, for each tile control list that it produces: a head pointer, indicating the start of the tile control list; and a tail pointer, indicating the location in memory where the first core should continue writing the tile control list if it encounters a primitive that belongs in the respective tile, wherein each first core further maintains, for each tile control list, a record of the group index of the primitive last written by the core to the tile control list. Each tile control list may be stored in a linked-list structure. The tail pointer and head pointer may be useful, in particular, when resuming processing after a partial render.

Optionally, if the first core encounters a primitive that belongs in a given tile, and the first core determines that the tail pointer for the respective tile control list is invalid, then the first core may be configured to: request a memory allocation for that tile control list; receive a first address of a first portion of memory allocated in response to the request; and update the head pointer to point to said first address.

This enables the first core to begin a tile control list in memory - in particular, when no memory has previously been allocated for the list, or when a portion of memory previously allocated has been freed. The "invalid" tail pointer mentioned may be a null pointer.

The first core may be further configured to update the tail pointer associated with the tile control list to point to said first address. The first core may be further configured to write, to the first portion of memory, data associated with said primitive. After writing the data associated with the primitive, the first core may be further configured to advance the tail pointer to the end of the written data.

Optionally, if the first core encounters a primitive that belongs in a given tile, and the first core determines that the group index of said primitive differs from the group index last written to the respective tile control list, then the first core is configured to: request a memory allocation for that tile control list; receive a second address of a second portion of memory allocated in response to the request; and write, to the memory location indicated by the tail pointer, a pointer to the second address.

The first core may be further configured to write, to the second portion of memory, data associated with said primitive. Before writing the data associated with the primitive, the first core may be configured to write, to the second portion of memory, the group index of the primitive. After writing the data associated with the primitive, the first core may be further configured to advance the tail pointer to the end of the written data.

In this way, the first core adds the newly allocated second portion of memory to the linked list forming the tile control list. Allocating a new portion of memory when a new group is encountered ensures that the groups are easily addressable in memory.

Optionally, the first core may be configured to, after writing data associated with a primitive to a tile control list, write a terminate marker at the end of the tile control list. The terminate marker may be written to the memory location indicated by the tail pointer.

Head pointers may be represented with a first number of bits; tail pointers may be represented with a second, greater number of bits. This means that the tail pointers can address memory with finer resolution (granularity) than the head pointers. Each portion of memory allocated for the tile control list may be addressable at the resolution provided by the head pointers. This means that the links from one block of memory to the next can be stored with a reduced number of bits. The increased bit depth of the tail pointers, compared with the head pointers, permits the necessary finer resolution for writing data within each portion of memory.

Optionally, the second cores are configured to execute a partial render, comprising performing fragment processing for primitives in a renderable range of groups, the renderable range starting with a starting group and ending with an ending group, wherein, before executing the partial render, geometry processing has been completed for every group ahead of the ending group in the ordering, wherein, upon execution of the partial render, each first core updates its tail pointers based on a comparison of its group index records with the renderable range of groups rendered in the partial render.

Optionally, upon execution of the partial render, if a tail pointer is associated with a group index in the renderable range, the first core is configured to invalidate said tail pointer. A tail pointer may be invalidated by setting it equal to zero (null).

Groups rendered in a partial render (that is, groups in the renderable range) may be identified by comparing their group index with the group index of the starting group and the group index of the ending group. The groups that were renderable will have group indices in a range defined by the group indices of the starting group and ending group.

If a tail pointer is associated with a group index that is after the group index of the ending group, that tail pointer is left unchanged when a partial render is executed. Such tail pointers remain valid and can continue to be used by the first cores during geometry processing.

Optionally, each tile control list has an associated head pointer, pointing to the start of the tile control list, wherein each rasterisation pipeline of each second core is configured to read, from the memory location indicated by the head pointer, a portion of the respective tile control list.

The portion may include (optionally at the start of the portion) an indication of the group index of the primitives in that portion. The portion may include (optionally at the end of the portion) a pointer to the next portion of the tile control list. Each tile control list may comprise a plurality of such portions.

Each tile control list may comprise a linked series of portions, each portion including: data associated with a set of primitives; if the set of primitives belongs to a different group from the preceding portion of the tile control list, an indication of the group index of the primitives in that portion; and a pointer to the next portion. Optionally, when stitching together the tile control lists, each rasterisation pipeline of each second core is configured to remove the group indices and the pointers.

Each portion may contain data associated with primitives of just one group index. Each time a new group index is encountered, in the geometry processing stage, the relevant first core may request allocation of a new portion of memory to store the primitives of that new group.

The rasterisation pipelines may be configured to include neither the group indices nor the pointers in the combined tile control streams. Each rasterisation pipeline may be configured to produce the combined tile control stream as a single continuous stream, without links/pointers.

When stitching together the tile control lists, each rasterisation pipeline may be configured to read from the tile control list associated with the earliest group index, and to append data read from that tile control list to the combined tile control stream.

The rasterisation pipeline may be configured to read portions of the tile control lists from memory and buffer them in the rasterisation pipeline.

Each rasterisation pipeline may be configured to: obtain an indication of a renderable range of groups, defined by a starting group and an ending group; maintain a record of the head pointer for each tile control list, for each tile it has been assigned to process; and when it reaches the end of a particular tile control list: update the head pointer of that particular tile control list with a null value; and if the last group index encountered by the rasterisation pipeline in that particular tile control list is the group index of the ending group of the renderable range, stop stitching, and update the head pointers of the other tile control lists to point to the earliest unrenderable group in the respective tile control lists.

The ending group is a group of primitives for which geometry processing is currently still being performed by one of the first cores. More specifically, it is the earliest group in the ordering that is currently being processed by any of the first cores. When the rasterisation pipeline reaches the end of this group, it must stop stitching the tile control lists, because there may (or may not) be further primitives in this group that have not yet been processed by the relevant first core. It would be incorrect to continue stitching groups of primitives that are later in the ordering - this could cause a rendering error in the event that further primitives of the unfinished group fall inside the tile, because the correct ordering of primitives will have been broken.

By updating the head pointer of the other tile control lists to point to the earliest unrenderable group (that is, the earliest group in the respective tile control list that is beyond the renderable range), the rasterisation pipeline prepares itself for the possibility of a partial render. If a partial render is executed, the stitching can resume correctly based on the updated head pointers. Note that the head pointer for the tile control list containing the ending group is updated with a null value. If, after a partial render has been executed, the relevant first core adds more primitives of the ending group to this control list, a new portion of memory will be allocated for storing the description of these primitives. The head pointer of the tile control list will be updated, at that stage, to point to the new portion of memory.

A rasterisation pipeline may also reach the end of a tile control list in a group other than the ending group. If the group in question is in the renderable range, then this means that all of the primitive data in this group has now been stitched, and there is (currently) no further work for the relevant first core to do. Accordingly, the head pointer is updated with a null value. (Any further additions to such a tile control will necessitate a new portion of memory to be allocated.) In other cases, the group in question may be beyond the renderable range. In that case, the head pointer is updated to point to the earliest unrenderable group in that tile control list.

Still further provided is a graphics processing system comprising a core or graphics rendering system as summarised above, and/or configured to perform a method as summarised above. The graphics processing system may be embodied in hardware on an integrated circuit.

Also provided is a method of manufacturing, using an integrated circuit manufacturing system, a graphics processing system as summarised above.

Also provided is a method of manufacturing, using an integrated circuit manufacturing system, a graphics processing system as summarised above, the method comprising: processing, using a layout processing system, a computer readable description of the graphics processing system so as to generate a circuit layout description of an integrated circuit embodying the graphics processing system; and manufacturing, using an integrated circuit generation system, the graphics processing system according to the circuit layout description.

Further provided is computer readable code configured to cause a method as summarised above to be performed when the code is run. The computer readable code may be configured to control a graphics processing system as summarised above to perform the method when the code is run on the graphics processing system. Also provided is a computer readable storage medium (optionally non-transitory) having encoded thereon the computer readable code.

Also provided is an integrated circuit definition dataset that, when processed in an integrated circuit manufacturing system, configures the integrated circuit manufacturing system to manufacture a graphics processing system as summarised above.

Also provided is a computer readable storage medium (optionally non-transitory) having stored thereon a computer readable description of a graphics processing system as summarised above that, when processed in an integrated circuit manufacturing system, causes the integrated circuit manufacturing system to manufacture an integrated circuit embodying the graphics processing system.

Also provided is a computer readable storage medium (optionally non-transitory) having stored thereon a computer readable description of a graphics processing system as summarised above which, when processed in an integrated circuit manufacturing system, causes the integrated circuit manufacturing system to: process, using a layout processing system, the computer readable description of the graphics processing system so as to generate a circuit layout description of an integrated circuit embodying the graphics processing system; and manufacture, using an integrated circuit generation system, the graphics processing system according to the circuit layout description.

Further provided is an integrated circuit manufacturing system configured to manufacture a graphics processing system as summarised above.

Also provided is an integrated circuit manufacturing system comprising: a computer readable storage medium (optionally non-transitory) having stored thereon a computer readable description of a graphics processing system as summarised above; a layout processing system configured to process the computer readable description so as to generate a circuit layout description of an integrated circuit embodying the graphics processing system; and an integrated circuit generation system configured to manufacture the graphics processing system according to the circuit layout description.

The layout processing system may be configured to determine positional information for logical components of a circuit derived from the integrated circuit description so as to generate a circuit layout description of an integrated circuit embodying the graphics processing system.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1A is a block diagram illustrating a multicore graphics rendering system according to an example;
Figure 1B illustrates one of the fragment shading slave units of Figure 1 in greater detail;
Figure 2A illustrates a distribution of work packages between two cores;
Figure 2B illustrates the outputs of geometry-processing work-packages being recombined into a control stream for fragment processing;
Figure 3A shows exemplary tile control lists;
Figure 3B shows an exemplary control stream, produced by stitching together the tile control lists of Figure 3A;
Figures 4A-4C illustrate a stitching process according to an example;
Figure 5A illustrates buffered tile control lists, according to an example;
Figure 5B illustrates a combined control stream generated from the buffered tile control lists of Figure 5A;
Figure 6A is a schematic illustration of records maintained by a fragment shading slave unit before a partial render, according to an example;
Figure 6B illustrates how the records of Figure 6A are updated in response to the partial render;
Figure 7 illustrates a tail pointer cache maintained by a geometry processing slave unit before and after a partial render, according to an example;
Figure 8 shows a computer system in which a graphics processing system is implemented; and
Figure 9 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

According to one exemplary architecture, an input geometry stream, comprising primitives, is broken up into pieces of work for parallel processing using "pipeline interleave markers" (PIMs). These are group indices that are used to tag each piece of geometry work (that is, each group of primitives) according to its position in the original stream provided by the application driver. The PIMs will be used in the fragment shading stage to process the primitives in the correct order. It is convenient to refer to each piece of work (that is, group of primitives) as simply a "PIM", since each piece corresponds uniquely to one marker. The different PIMs can be allocated to different cores, which then carry out the geometry processing work for the different PIMs independently. Geometry processing of PIMs by a given core produces a set of tile control lists - one tile control list per tile.

Fragment shading is also implemented in parallel, typically by allocating different tiles to different cores, as mentioned above.

All of the cores have access to a shared memory, from which they read input data and write output data. The tile control lists produced by the cores during geometry processing form the input for the fragment processing stage.

In the exemplary architecture, memory is allocated to geometry processing work dynamically by a "parameter management" (PM) master unit - so called because it allocates the memory for the parameter buffer. The PM master has a certain free pool of memory that it can allocate to geometry work being performed by different cores. The cores use the allocated memory for writing of tile control lists and primitive blocks. The maximum size of the free pool will depend on the specification of the particular graphics processing system in question, but it is inevitably finite. In general, it is not possible to predict, before doing the geometry processing, how much memory will be needed to contain the tile control lists and linked primitive block structures associated with a given PIM. This is true even if each PIM contains the same number of primitives. Factors affecting the memory requirements of a PIM may include the coverage of the primitives in tiles, and the complexity of the primitives (in particular, the data associated with each vertex).

The inventors have recognised that problems can arise as the remaining size of the free pool dwindles. In the worst case, the graphics processing system (e.g. a GPU) can reach an unrecoverable deadlock state. This problem has its origins in the tension between the parallel processing and the externally imposed constraint on the sequence of rendering operations.

The problem is most easily understood by reference to an example. In a dual core system, let us assume that geometry processing for PIM0, PIM2, PIM5 and PIM6 has been allocated to Core 0, and geometry processing for PIM1, PIM3 and PIM4 has been allocated to Core 1. Each core processes each PIM independently, producing a separate tile control list per tile.

Each tile control list written by a core for each tile includes PIM markers. These are used to stitch together the PIM sections from multiple tile control lists for the same tile (one from each core) into a master control stream in PIM order, with all the PIM information removed. Each update to a tile control list for a tile contains a link to a primitive block structure, which contains more detailed information about the primitives in terms of their 3D space vertices, and other information required during fragment processing such as uniform and texture values, and state for fixed function processing units. For completeness, it is noted that primitive blocks may contain primitives for different tiles. A mask in the tile control list may be used to indicate which of the primitives in the primitive block belong to the "current" tile. Each tile control list therefore identifies primitives associated with a tile within the primitive block structures in the parameter buffer.

For the fragment shading work, each tile will be allocated to one of the two cores. To process the fragment shading for a given tile, the core (specifically, a fragment shading slave unit within the core) will stitch together two tile control lists - one that was produced by Core 0 and the other that was produced by Core 1. The PIM markers are used to preserve the correct ordering, in this stitching process.

Consider now what might happen if geometry processing work is completed out of sequence. For example, assume that Core 1 has processed PIM1 and is in the middle of processing PIM3. Meanwhile, Core 0 has completed all of its geometry processing work. This means that the parameter buffer contains tile control lists for PIM0, PIM1, PIM2, PIM5 and PIM6 (as well as a partially completed tile control list for PIM3). Let us assume that the free pool starts to run out as Core 1 continues its processing of PIM3.

One way to recover memory used in the parameter buffer is to perform a "partial render", in which the primitives processed so far are submitted for fragment processing. Once the relevant portions of memory have been read by the cores conducting fragment processing, these portions can be freed, so that they can be reallocated by the PM master for more geometry processing work.

In our example above, the partial render can include PIM0, PIM1, PIM2 and the part of PIM3 whose geometry processing has been completed so far. (Note that the sequence of primitives is preserved within each PIM; therefore, partial rendering of a PIM is possible.) The memory allocated to the rendered PIMs can be freed, and reallocated. Note that PIM5-PIM6 cannot be rendered, because this would break the ordering-constraint - fragment processing for these PIMs must be delayed until after fragment processing for PIM3 (and PIM 4) has been completed. This means that the memory allocated in the parameter buffer for PIM5-PIM6 cannot be freed and reused.

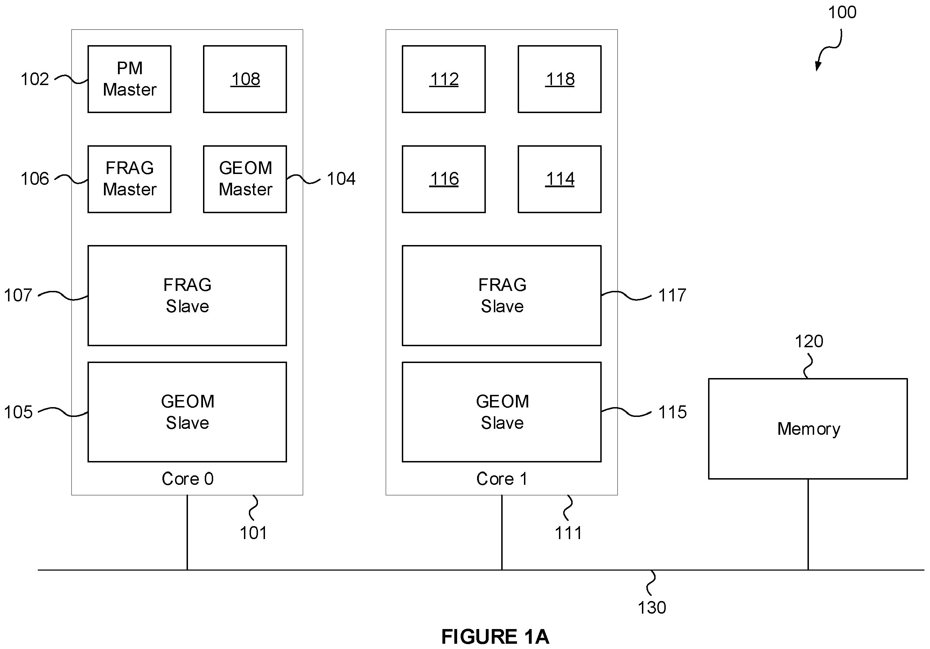

Figure 1A is a block diagram illustrating a multicore graphics rendering system 100 according to an example. The system 100 comprises two cores in this example - a first core 101, and a second core 111. It should be understood that the system may include any number of cores, in general. The first core 101 comprises: a parameter management master unit 102; a geometry processing master unit 104; and a fragment shading master unit 106. It may also comprise one or more additional master units 108. The geometry processing master unit 104 is responsible for splitting up, assigning, and distributing geometry processing work packages (groups of primitives) among the various cores. The fragment shading master unit 106 is responsible for splitting up, assigning, and distributing fragment shading work packages (each relating to one or more tiles) among the various cores. The parameter management master unit 102 is configured to allocate memory for the activities performed by the cores - in particular, to allocate memory for the geometry processing.

The first core 101 further comprises a geometry processing slave unit 105 and a fragment shading slave unit 107. The geometry processing slave unit 105 is configured to control the share of the geometry processing work that is assigned to the first core 101. The fragment shading slave unit 107 is configured to control the share of the fragment shading work that is assigned to the first core 101.

According to the present example, the second core 111 is configured similarly to the first core. The cores 101 and 111 are designed and instantiated as identical components, because this is more convenient from the perspectives of design and validation, and also because it facilitates scalability. Each core is designed so that it may be instantiated in a given graphics rendering system by itself, or with any number of like cores. The second core 111 therefore comprises a parameter management master unit 112; a geometry processing master unit 114; and a fragment shading master unit 116. However, only one instance of each master unit is needed in the graphics rendering system 100; therefore, only one instance of each master unit is active. In the present example, without loss of generality, it will be assumed that the master units of the first core 101 are active and the master units of the second core 111 are inactive. It should be understood, however, that this is not limiting on the scope of the present disclosure. Any given active master unit may reside in any of the cores in the multicore system.

The second core 111 also comprises a geometry processing slave unit 115 and a fragment shading slave unit 117. It should be understood that both geometry processing slave units 105 and 115 are active, and geometry processing work is divided between them by the geometry processing master unit 104. Likewise, both fragment shading slave units 107 and 117 are active, and fragment processing work is divided between them by the fragment shading master unit 106.

The system 100 further comprises a memory 120, which is shared between the cores 101, 111. The cores 101, 111 and the memory 120 are connected by a bus 130, or other suitable interconnect. The shared access to the memory 120 facilitates the parallel processing, by the cores, of geometry processing and fragment shading. The geometry processing slave units 105 and 115 write tile control lists and primitive blocks to the memory 120 as they execute the geometry processing. The fragment shading slave units 107 and 117 are then able to read these tile control lists and primitive blocks, as input for the fragment shading stage. As explained already above, each geometry processing slave unit produces a set of tile control lists - one tile control list per tile. Each fragment shading slave unit may be configured to process more than one tile at a time. A fragment shading slave unit, when processing a given tile, reads the N tile control lists for that tile (where N is the number of cores, or more specifically the number of cores with active geometry processing slave units). The fragment shading slave unit assembles these individual tile control lists into a single master control stream for the tile, and executes fragment shading based on this master control stream.

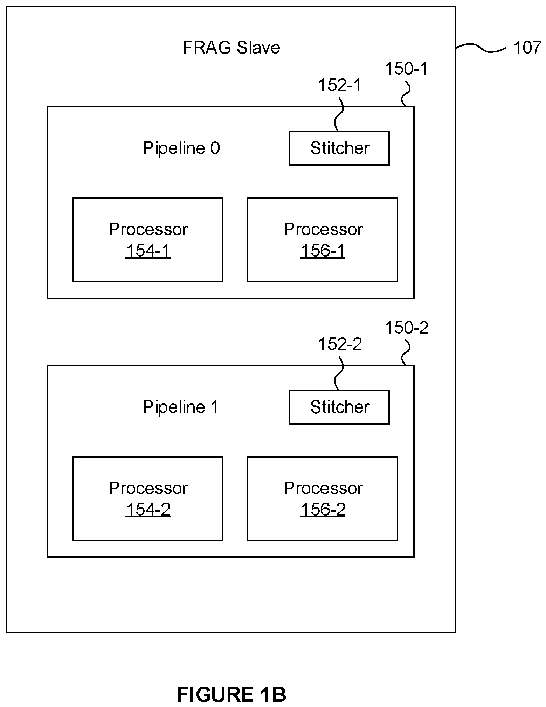

Figure 1B is a block diagram illustrating one of the fragment shading slave units 107 of Figure 1. It should be understood that the other fragment shading slave unit 117 is identical. The fragment shading slave unit 17 comprises two rasterisation pipelines 150-1 and 150-2. These are configured to operate in parallel, processing different tiles. Each pipeline includes a stitcher 152, and two processors 154 and 156. (In the reference numerals in the drawing, the suffix "-1" denotes the stitcher and processors of the first pipeline 150-1; the suffix "-2" denotes the stitcher and processors of the second pipeline 150-2.) The processors are also configured to operate in parallel, processing different tiles. Consequently, the fragment shading slave unit 107 provides two further levels of parallelisation. Between them, the four processors 154-1, 156-1, 154-2, 156-2 of the two pipelines 150-1, 150-2 can perform fragment shading concurrently for four tiles. The stitching of tile control lists into master control streams is performed by the stitchers 152-1, 152-2. The stitcher 152-1 of the first pipeline 150-1 is responsible for stitching together the control streams for the tiles to be processed by both of the processors 154-1, 156-1 in that pipeline. Likewise, the stitcher 152-2 of the second pipeline 150-2 is responsible for stitching together the control streams for the tiles to be processed by both of the processors 154-2, 156-2 in that pipeline.

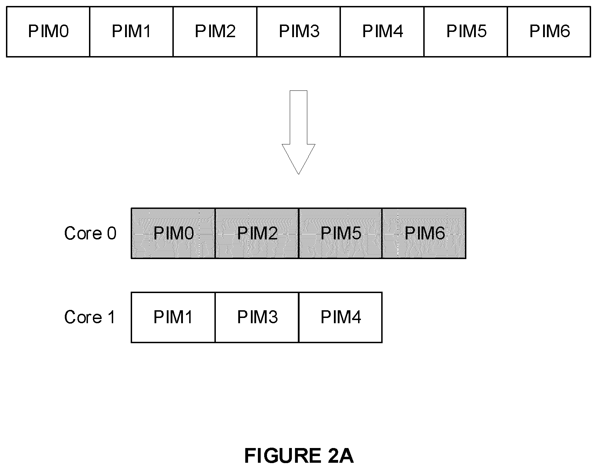

Figure 2A illustrates a distribution of geometry processing work packages between two cores. The contents of a draw call are illustrated as a sequence of blocks. Each of these blocks represents a work-package, and each is identified by its "pipeline interleave marker" (PIM). The PIM is the index of the work-package within the sequence of geometry-processing work-packages. Each work-package consists of a group of primitives requiring geometry processing. The PIM numbers are assigned to the blocks (work-packages) in consecutive increasing order, so that they capture the ordering of the primitives as received from the application driver in the draw call. The ordering of the primitives is also preserved within each block. The geometry processing master unit 104 is responsible for splitting up the draw call into these work-packages and assigning a PIM number to each package. The geometry processing master unit 104 is also responsible for assigning the various work packages to the cores that are available to do geometry processing work. One possible distribution of work packages is shown in Figure 2A. The geometry processing master unit 104 assigns PIM0, PIM2, PIM5, and PIM 6 to the first core 101 (Core 0) and assigns PIM1, PIM3, and PIM4 to the second core 111 (Core 1). The geometry processing master unit 104 typically tries to split up the geometry processing work such that each core is utilised approximately equally. For example, if the cores are identical and have the same capacity to do work, then the geometry processing master unit 104 would seek to assign the same amount of work to each core. For example, the geometry processing master unit 104 may distribute the geometry processing work such that each core is assigned approximately the same number of primitives to process. However, it is impossible to predict accurately, in advance, how much computational work will be involved in processing a given set of primitives. Therefore, it is almost inevitable that imbalances in the workloads of the different cores will arise (despite the best efforts of the geometry processing master unit 104 to balance these workloads). It is therefore also almost inevitable that the processing of PIMs by the geometry processing slave units 105, 115 will finish out of sequence.

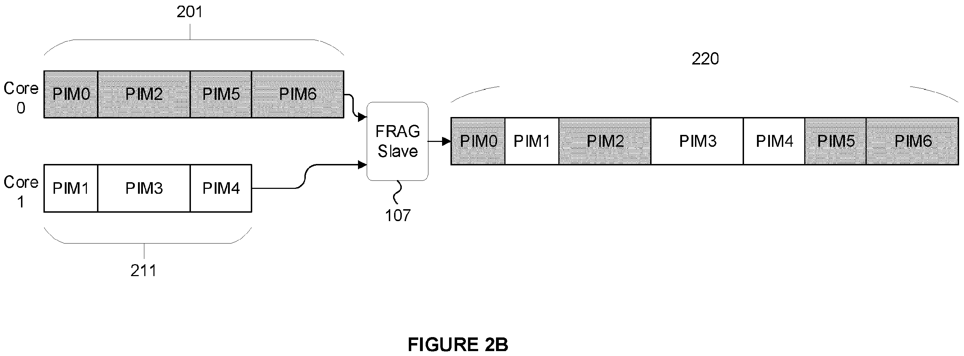

The PIMs are used to re-impose the original sequence on the primitives. Figure 2B illustrates the outputs of geometry-processing work-packages being recombined into a master control stream for fragment processing. Let us assume that the fragment shading slave unit 107 has been assigned the task of performing fragment shading for a single tile "Tile (0, 0)" of the frame. The first core 101 (Core 0) provides a first tile control list 201 for Tile (0, 0), containing the primitives of PIM0, PIM2, PIM5 and PIM6 that fall within the tile; the second core 111 (Core 1) provides a tile control list 211 containing the primitives of PIM1, PIM3 and PIM4 that fall within the tile. Note that the blocks representing the different PIMs are shown in Fig. 2B with varying widths, indicating the variable lengths of time that it takes to process them in the geometry processing stage.

The fragment shading slave unit 107 assembles the two tile control lists (one from Core 0 and one from Core 1) into a single master control stream 220. As explained above, this is done by a stitcher 152-1 or 152-2, in one of the two pipelines 150-1, 150-2. The stitching is done by reading PIM markers in each tile control list 201, 211 and stitching the PIMs back together in the correct order, according to their PIM numbers. Note that we have described the fragment shading slave unit 107 as processing a single tile purely for the purpose of simplicity. In general, as noted above, a fragment shading slave unit 107, 117 may be assigned more than one tile at a time to process. If it is assigned more than one tile, the stitchers 152-1, 152-2 of the fragment shading slave unit 107 will stitch together respective tile control lists for each tile, to produce a master control stream for each tile. The splitting up and assignment of fragment shading work to the different fragment shading slave units 107, 117 is handled by the fragment shading master unit 106.

It will be understood from Figure 2B that, if geometry processing has not been completed for a given PIM, none of the PIMs following it in the sequence can be processed in the fragment shading stage. The master control stream can only be stitched together to the extent that the geometry processing work has been completed. In order to perform geometry processing work, the geometry processing slave units 105, 115 require allocations of memory where they can write the outputs of their work (tile control lists and associated primitive blocks). In the same way that it is practically impossible to predict the computational complexity of performing geometry processing work for a given PIM, it is also practically impossible to predict the memory requirements for processing that PIM. For this reason, the memory allocation is handled dynamically. As already explained above, the cores 101, 111 share access to the memory 120. In order to share access in the manner required, they need a consistent view of what is stored where. According to the present implementation, this is achieved by providing centralised control of the memory allocations. Each time one of the geometry processing slave units 105, 115 needs additional memory, it requests it from the parameter management master unit 102. The parameter management master unit 102 allocates the memory from an available free stack reserved for geometry processing. When fragment shading is performed, the data written to the memory 120 by the geometry processing slave units 105, 115 is consumed by the fragment shading slave units 107, 117. Once tile control lists and primitive block data have been consumed during fragment shading, the corresponding memory can be deallocated and returned to the free stack by the parameter management master unit 102.

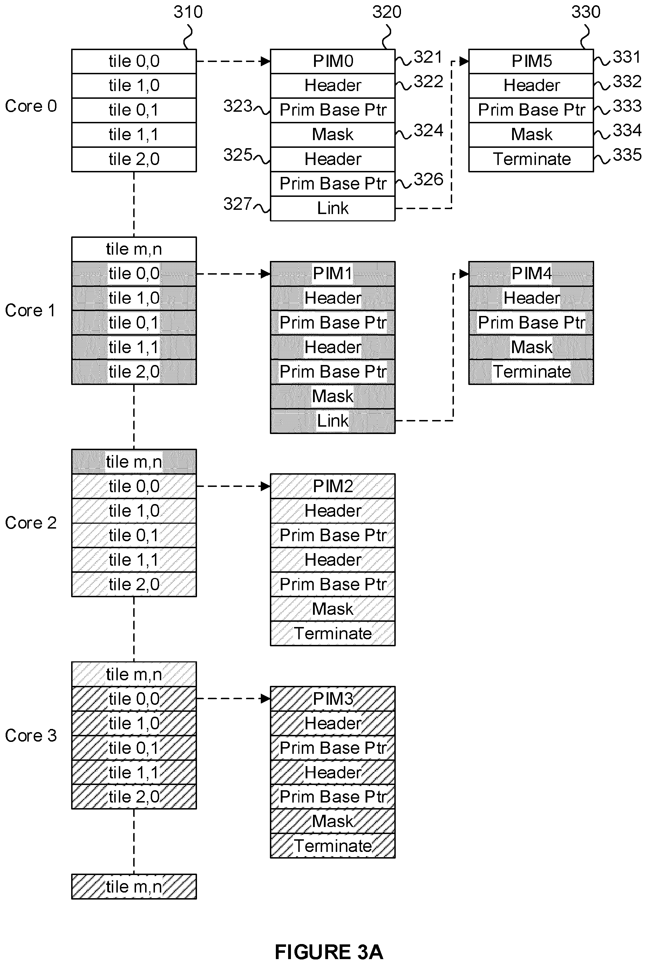

Figure 3A shows tile control lists according to an example. In this example, there are four cores and m × n tiles in total. Each of the four cores produces m × n tile control lists - one for each tile. Therefore, for each tile, there are four tile control lists. The drawing illustrates the four tile control lists for Tile 0,0 (only). The tile control lists are stored in a linked list structure. A block of memory 310 stores head pointers (also referred to as "region headers") for each of the 4 × m × n lists. Each head pointer points to the first block of memory in the list. The tile control list of Core 0 for Tile 0,0 starts with a second block of memory 320. The second block of memory starts with the group index (PIM number) 321 of the first group of primitives in the list. (In the example, this happens to be PIM0, however it could be any PIM number, in general.) This is followed by a header 322, containing information such as the number of primitives in the block, the format of the following mask, whether the primitive base pointer word is present (i.e., follows) or an offset is used (which is encoded in the header word) and some other small pieces of state data. In other words, the header generally describes setup information which allows the hardware to decode the control stream format correctly. Next is a pointer 323 to a primitive block containing the primitive data. The inclusion of such a pointer is optional. For example, as an alternative, the primitive data could be embedded directly in the tile control list. A mask 324 is provided (optionally), to indicate which primitives in the primitive block relate to the present tile control list (that is, relate to Tile 0,0). The mask 324 is followed, in this particular example, with a further header 325 and pointer 326. The data in the second block of memory 320 finishes with a link 327, which is a pointer to the next block of memory 330 in the linked list. This next block of memory 330 contains primitive data relating to a new group (PIM); therefore, it begins with the group index (PIM number) 331 of this group. In this example, the new group happens to be PIM5. The group index 331 is followed by a header 332; a pointer 333 to a primitive block; and an associated mask 334. The control list terminates with a terminate marker 335.

The other tile control lists for Tile 0,0, written by the other cores, are constructed similarly. Each list is written incrementally by a geometry processing slave unit of a core performing geometry processing. The blocks of memory (e.g. blocks 320, 330) used to store the tile control lists are allocated dynamically. To begin with, all of the head pointers in the block of memory 310 are initialised to null values. When a geometry processing slave unit wishes to write primitive data to a particular tile control list, it reads the respective head pointer. If the head pointer is a null pointer, the slave unit knows that no memory is currently allocated for this list. The slave unit requests a memory allocation from the PM master unit 102. The PM master unit 102 allocates the memory and returns the address of the block (for example, block 320). The geometry processing slave unit updates the head pointer of the respective tile control list with the address received from the PM master unit 102. The geometry processing slave unit then begins to fill the block of memory with the data of the tile control list. It requests a new block of memory from the PM master unit either (i) when it fills the current block, or (ii) when it begins processing primitives associated with a new group index (PIM number). It writes a link (for example, link 327) to the next block (for example, block 330) at the end of the preceding block (for example, block 320). A terminate marker (such as the marker 335) is written at the current endpoint of the tile control list. Staying with the example of Fig. 3A, if Core 0 has not yet finished its geometry processing work, it is in general not possible to predict whether the terminate marker 335 will remain the end of the tile control list, or if further data will need to be added. If the geometry processing slave unit of Core 0 encounters further primitives of PIM5 that belong in Tile 0,0, it will write the relevant data to the block of memory 330 - beginning by overwriting the terminate marker 335. If the block of memory 330 is full or if the geometry processing slave unit of Core 0 finds a primitive of a subsequent group (for example, PIM7) that belongs in Tile 0,0, then it will request a fresh block of memory from the PM master unit 102.

Each geometry processing slave unit maintains a tail pointer cache. This stores, for each of the tile control lists being written by the slave unit, a tail pointer, indicating the location in memory where the slave unit should continue writing the tile control list if it encounters further primitives that belong in the respective tile. This enables the slave unit to keep track of the end of the list. The tail pointer cache also includes, for each tile control list, a record of the group index (PIM number) of the primitive that was most recently written by the slave unit to that tile control list. In other words, the tail pointer cache keeps track of the current PIM number for each tile. The tail pointer cache is useful for resuming geometry processing after a partial render, as will be explained later below.

The start of each new group (PIM) in each tile control list is easily addressable, because each one begins at the start of a fresh block of memory. This can enable the head pointers and the links (for example, link 327) to be stored with a reduced number of bits, compared with the tail pointers. The head pointers and links can address the memory with reduced granularity, since they only ever need to point to the start of blocks of memory. In contrast, the tail pointers need to be able to address the memory within each block, with a finer granularity.

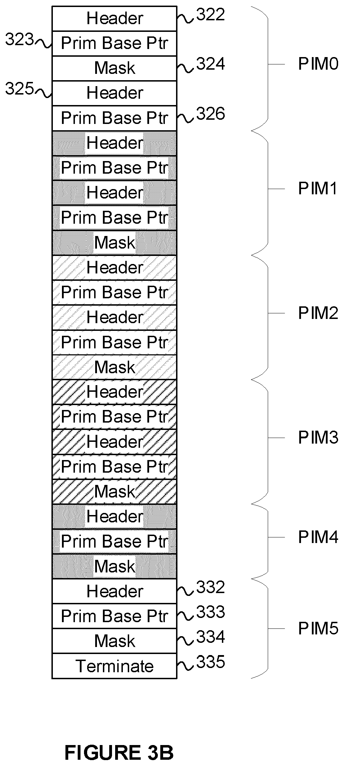

Figure 3B shows the stitched master control stream generated for Tile 0,0 from the tile control lists in the example of Figure 3A. The group indices (PIM numbers) have been removed, because they are no longer needed in the combined control stream - the ordering of primitives is once again implicit from the order in which they are encountered in the control stream. Similarly, the links have been removed, because the control stream is a single consecutive stream of data - it is no longer fragmented in separate blocks of memory. The remaining information in the tile control lists is stitched into the combined control stream. This includes the headers, the pointers to primitive blocks, and the masks.

Let us assume that the fragment shading for Tile 0,0 has been assigned to the first processor 154-1 of the first rasterisation pipeline 150-1 in the fragment shading slave unit 107 of the first core 101. In that case, the combined control stream shown in Fig. 3B will be produced by the stitcher 152-1. It will be output directly by the stitcher 152-1 to the processor 154-1. In other words, according to the present implementation, the combined control stream is never stored to the memory 120. This saves time and increases efficiency, since there is no need to write the combined control stream and read it again from memory. It also reduces memory access bandwidth. Incidentally, although the example of Figures 3A-3B involves a consecutive, unbroken series of PIM numbers (from 0 to 5), this is generally not the case. In general, a control stream will involve a monotonic series of group indices, but there will usually be gaps (since, for some groups, none of the primitives will end up in the tile in question). In the present example, using ascending PIM numbers, the series is a monotonically increasing series. It should be understood that the series could equally be represented instead by descending PIM numbers. This would result in a monotonically decreasing series.

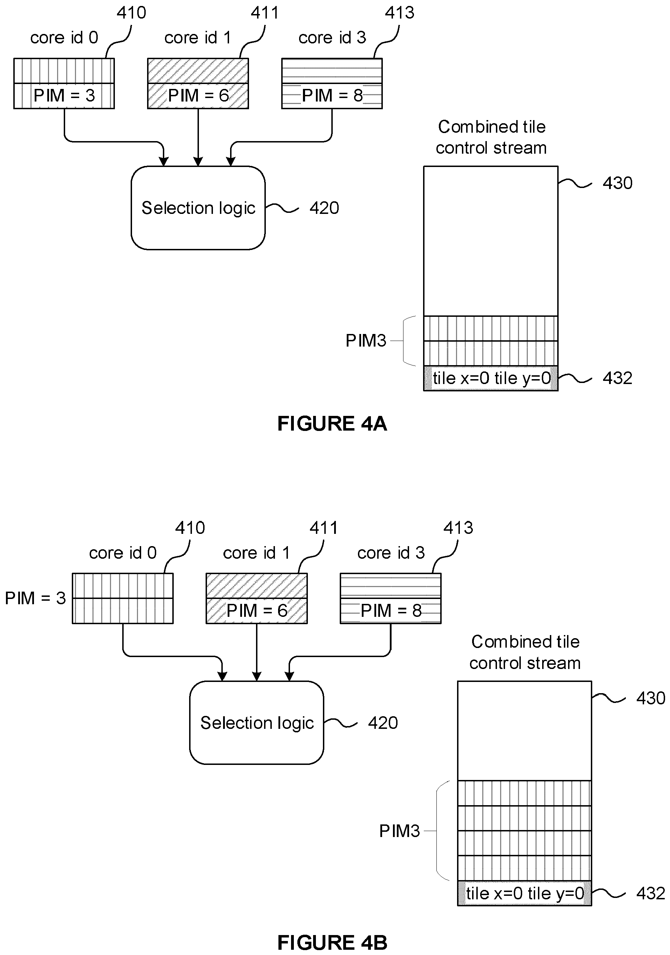

The stitching process performed by each stitcher 152-1, 152-2 will now be described, with reference to the example illustrated in Figures 4A-4C. Note that this is a different example from that of Figures 3A-3B, with different groups (PIMs) being processed by different cores. The PIM numbers are still assigned in ascending order, in this example. To stitch together the control stream for a given tile (for example Tile 0,0), the stitcher reads the head pointers of the tile control lists associated with that tile. Some of the head pointers may have null values, indicating that the respective tile control list is empty. For the other head pointers (that is, for all of the valid head pointers) the stitcher loads the block of memory pointed to by the head pointer into a first-in-first-out (FIFO) buffer. These are the first blocks of memory in each linked list. As well as maintaining a FIFO buffer for each (valid / non-empty) tile control list, the stitcher maintains a FIFO buffer for the combined tile control stream.

This is illustrated schematically in Figure 4A, which shows input FIFO buffers 410, 411, 413, output FIFO buffer 430, and selection logic 420. These are internal to the stitcher, in the present example. It is assumed that there are three valid tile control lists, produced by Core 0, Core 1, and Core 3. Core 0 has produced a tile control list starting with PIM3. Core 1 has produced a tile control list starting with PIM6. Core 3 has produced a tile control list starting with PIM8. The first block of the tile control list produced by Core 0 is loaded into the FIFO buffer 410; the first block of the tile control list produced by Core 1 is loaded into the FIFO buffer 411; and the first block of the tile control list produced by Core 3 is loaded into the FIFO buffer 413. The stitcher begins the combined tile control stream by writing a tile start marker 432 for Tile 0,0 to the output FIFO buffer 430.

The first buffered block of each tile control list starts with the group index (PIM number). The selection logic 420 of the stitcher selects the earliest group index in the ordering. This corresponds to the lowest PIM number, in the present example; therefore, the selection logic 420 selects PIM3 from Core 0. The buffered block of memory from Core 0 is streamed into the output FIFO buffer 430 after the tile start marker 432.

In the next step, shown in Figure 4B, the selection logic inspects the PIM numbers associated with the input FIFO buffers again. The next block of memory from Core 0 also relates to PIM3. The stitcher maintains a local record of the group index (PIM number) last seen in each tile control list. This enables it to detect when the group index changes. As the block of tile control list from Core 0 relates (once again) to PIM3, the selection logic 420 selects this list, and again streams the block of data into the output FIFO buffer 430 for the combined tile control stream.

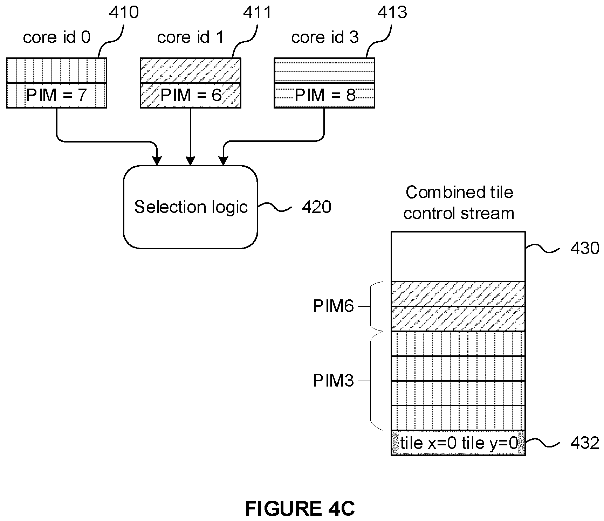

The next step is shown in Figure 4C. The selection logic 420 inspects the PIM numbers associated with the input FIFO buffers once again. Now, a new group index (PIM number) is found in the FIFO buffer 410 associated with the tile control list from Core 0, indicating that the next block of data in this tile control list relates to PIM7. Based on the group indices, the selection logic 420 determines that the earliest group is now PIM6 in the FIFO buffer 411 associated with Core 1 (since 6 is lower than 7 and 8). The stitcher streams the block of data from the selected FIFO buffer 411 into the output FIFO buffer 430 for the combined tile control stream. The stitcher can continue in this way, stitching together the various different tile control lists, using the PIM numbers in the lists to enforce on the combined tile control stream the original ordering of the groups of primitives. The stitcher keeps replenishing each buffer as long as there are further blocks of memory in the respective tile control list. This is done by following the links, from block to block, until a terminate marker is encountered.

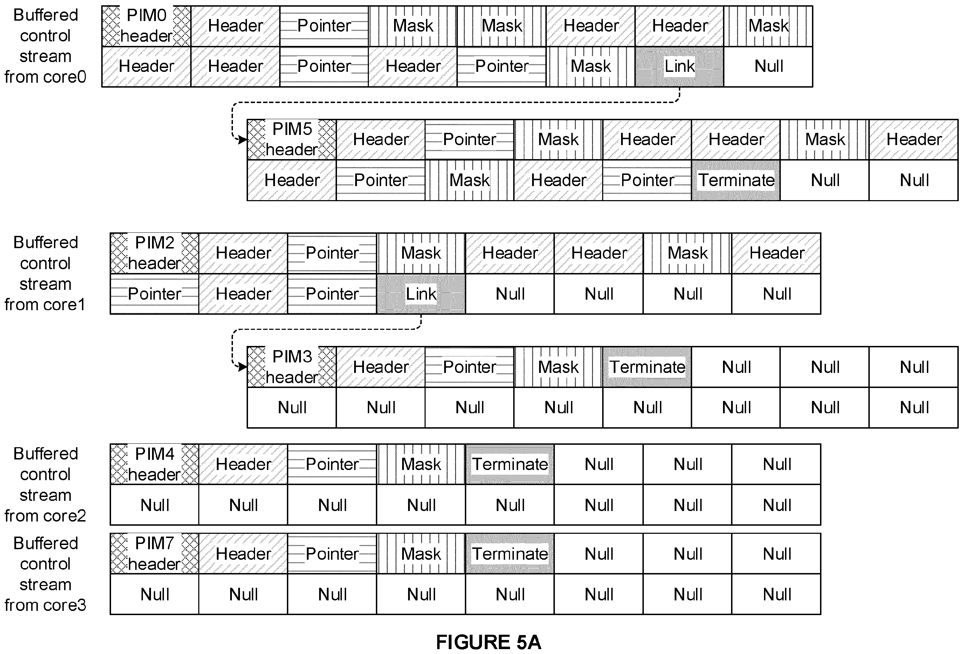

Figure 5A shows an example of the buffered blocks of tile control list in the input FIFO buffers of the stitcher, in greater detail. Note that this example is different from the example of Figure 4A-4B. In the example of Figure 5A, there are four active input FIFO buffers, buffering blocks of memory from four tile control lists, from four respective cores (Core 0, Core 1, Core 2, Core 3). The tile control list from Core 0 contains the primitives of PIM0 and PIM5; the tile control list from Core 1 contains the primitives of PIM2 and PIM3; the tile control list from Core 2 contains the primitives of PIM4; and the tile control list from Core 3 contains the primitives of PIM7.

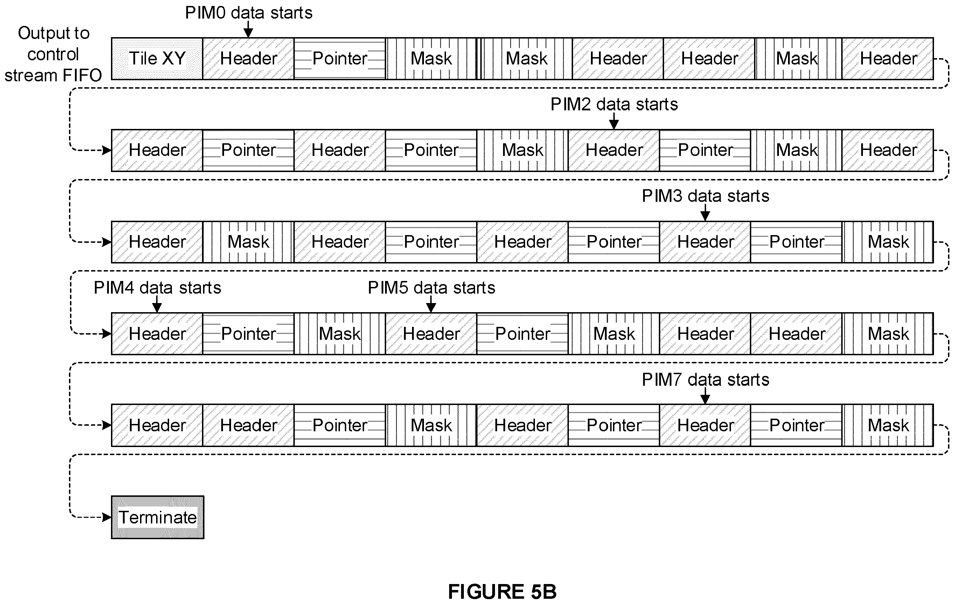

The corresponding stitched output, streamed into the output FIFO buffer for the combined tile control stream, is shown in Figure 5B. As explained already above, neither the group indices (PIM numbers) nor the links are included in the combined tile control stream. The combined tile control stream consists of headers, pointers to primitive blocks, and masks (as well as a tile start marker at the beginning and a terminate marker at the end). The start of the data from each PIM is indicated with an arrow in the drawing, for information. However, it should be understood that these indicators are not part of the combined tile control stream. The combined tile control stream shown in Figure 5B is in a form ready for processing by one of the processors 154, 156 responsible for fragment shading.

Comparing Figure 5B with Figure 5A, some of the advantages of stitching the tile control lists into a single contiguous stream become apparent. There is no longer any need to follow links to different memory locations, when parsing the combined tile control stream of Figure 5B. Furthermore, the storage of the combined tile control stream in the output FIFO buffer is more compact and efficient than the fragmented structure of the different tile control lists in Figure 5A. As seen in Figure 5A, the blocks of memory read by the stitcher are typically not completely filled with data. This creates "bubbles" of unused memory space. The storage structure in Figure 5A to some extent prioritises the needs of the geometry processing stage - the linked list structure is a convenient way to build the tile control lists. However, the contiguous stream in Figure 5B is much more efficient for the processors 154, 156 to consume.

As mentioned previously above, a partial render may be performed, in order to recover space in the memory 120 occupied by primitive data (tile control lists and primitive blocks). The need to support partial renders adds complexity to both the geometry processing stage and the fragment shading stage, as will be explained below. However, it allows memory to be managed more efficiently, and can potentially enable more complex scenes to be rendered successfully, for a given available memory size. In other words, without the possibility to perform a partial render, the graphics rendering system 100 might be more susceptible to running out of memory when performing geometry processing in parallel as described above. A system that supports partial renders can enable scenes to be rendered which involve large volumes of primitive data, using a TBDR approach, with reduced risk of running out of memory.

The first measure taken to support partial renders is to provide the geometry processing slave units 105 and 115, and the fragment shading slave units 107 and 117, with information about the "renderable range" of groups. This is the series of groups that are currently available to be rendered in a partial render. In the present example, the renderable range is defined by a starting group index, indicating the starting group of the range, and an ending group index, indicating the ending group of the range. Groups (PIMs) are renderable if geometry processing has been completed for them. The starting group is the earliest group in the ordering (corresponding to the lowest PIM number in the present example) for which geometry processing has completed, but which has not yet been submitted for fragment shading. The ending group is the earliest group in the sequence for which geometry processing has not yet completed. The ending group is also called the "lowest active PIM", since it is the PIM with the lowest PIM number of those currently undergoing geometry processing by the geometry processing slave units.

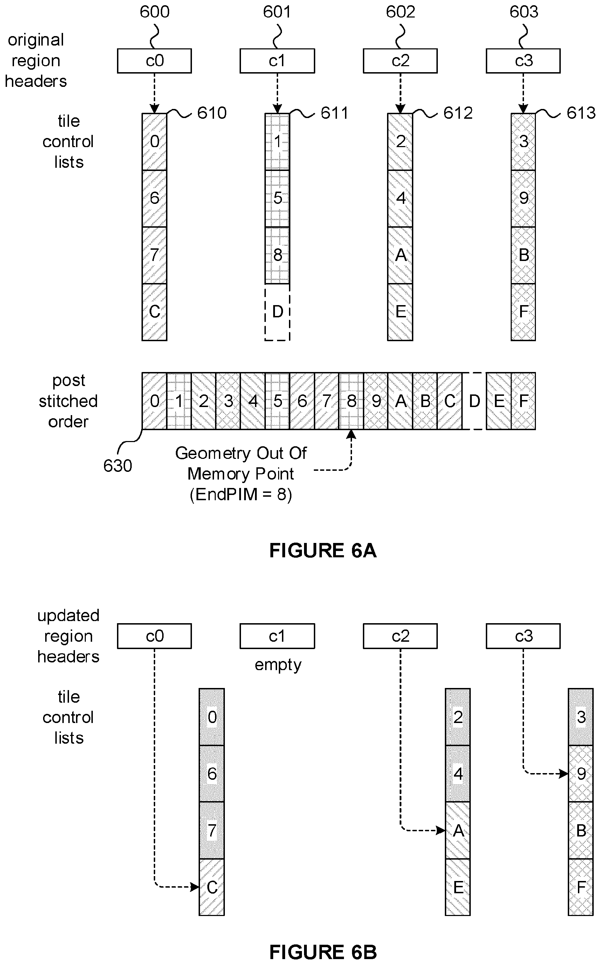

The additional measures necessary to support partial renders in the fragment shading stage will now be described, with reference to Figures 6A-6B. Each fragment shading slave unit 107, 117 maintains a record of the head pointer (region header) associated with each tile control list from which it is reading. This local record is initialised with the original head pointers (for example, as stored in the block of memory 310 by the geometry processing stage). This local record will be updated in the event of a partial render.

Figure 6A is a schematic diagram indicating the initial setup, for a specific example case. In this example, there are four cores c0 to c3, and accordingly for tile control lists 610-613. The region headers 600-603 point to the start of the respective tile control list. Core 0 has completed geometry processing for PIMs 0, 6, 7, and C. (Note that hexadecimal notation is used, in this instance.) Core 2 has completed geometry processing for PIMs 2, 4, A, and E. Core 3 has completed geometry processing for PIMs 3, 9, B, and F. Core 1 has completed geometry processing for PIMs 1 and 5, but the system runs out of memory on the free stack while Core 1 is processing PIM 8. This also means that, although PIM D has been allocated to Core 1 for geometry processing, this has not yet been started. PIM D is nevertheless shown in the diagram (in dashed outline) where it will eventually appear in the tile control list of Core 1. The desired combined tile control stream 630, after stitching, is shown below the individual tile control lists.

Since geometry processing has been completed for PIMs 0 to 7, and for part of PIM 8, the starting group is PIM 0 and the ending group is PIM 8. The partial render will perform fragment shading for all of the primitives of PIMs 0 to 7 and for the primitives of PIM 8 that have been written into the tile control list so far by Core 1. The stitcher producing the combined tile control stream 630 stitches the different tile control lists together until it reaches a terminate marker at the end of the tile control list from Core 1. This marks the point at which the system ran out of memory, and Core 1 had to stop its geometry processing work. The stitcher updates its local record of the head pointer 601 for the tile control list from Core 1 with a null value. This is because there is currently no memory block to point to in this list that has not already been stitched.

At this point, the stitcher compares the PIM number (PIM 8) that it was stitching when it found the terminate marker with the ending PIM number of the renderable range (that is, the lowest active PIM - also PIM 8). Because these PIM numbers are equal, the stitcher determines that it has stitched as far as it can validly stitch. If it were to go any further (in particular, by stitching PIM 9), it would risk missing primitives still to arrive from Core 1 for PIM 8.

When the stitcher encounters a terminate marker in the ending group of the renderable range, in this way, it also updates the head pointers of the other tile control lists. Each of the other head pointers is updated to point to the earliest unrenderable group (PIM) in the respective tile control list. This is illustrated in Fig. 6B. The head pointer for the tile control list from Core 0 is updated to point to PIM C, since PIMs 0, 6, and 7 are in the renderable range and will be processed in the partial render. Likewise, the head pointer for the tile control list from Core 2 is updated to point to PIM A, and the head pointer associated with Core 3 is updated to point to PIM 3. This places the stitcher in a state to continue its work correctly after the partial render. In the partial render, the memory allocated to groups (PIMs) in the renderable range will be freed. Consequently, the original head pointers (to memory blocks associated with PIMs 0, 1, 2, and 3) will no longer be valid. The stitcher will resume stitching starting from PIM C (for Core 0), PIM A (for Core 2), and PIM 9 (for Core 3). It cannot be predicted in advance whether Core 1 will have any further primitive data for the tile in question. When Core 1 resumes its geometry processing work, and finishes processing PIM 8, it may or may not find primitives that belong in the tile being stitched in Figures 6A-6B. When the geometry processing is complete (or when the system runs out of memory again), a further fragment processing operation will be triggered. The stitcher will start stitching as if it was starting afresh. In other words, the stitching operation proceeds in the same way, irrespective of whether no rendering has been done previously, a "full" render has been done previously, or a partial render has been done previously. The start of the renderable range will be PIM 8. If the further geometry processing by Core 1 has resulted in additional primitives from PIM 8 in the tile being stitched, then these will be found in a (newly allocated) tile control list from Core 1. The stitcher will see this, and will stitch these primitives first, followed by those of PIM 9, found in the tile control list from Core 3. On the other hand, if Core 1 did not find any further primitives from PIM 8 that belong in the tile being stitched, then either the head pointer will still contain a null value (if Core 1 has not found any primitives at all that belong in the tile being stitched) or the head pointer will point to a newly allocated tile control list containing some later primitives - for example, primitives from PIM 0x10 (being the hexadecimal value after F). In this case, the stitcher will begin by stitching the primitives from PIM 9, found in the tile control list from Core 3, because this is the lowest PIM number available.

The measures described above can provide a simple and effective way for each core doing fragment shading work to maintain the records that it needs to consume the tile control lists and perform fragment processing. They can also provide a simple and effective way for each such core to resume fragment processing correctly after execution of a partial render. As a result of these features, the cores require minimal information about the partial render - it is sufficient to provide the cores that are doing fragment shading with the group indices of the starting and ending group. Each second core can maintain its own head pointer records, independently and correctly, based on this information.

Each geometry processing slave unit also takes steps to prepare itself to resume work after a partial render. In particular, each geometry processing slave unit updates its tail pointer cache when a partial render is executed. As mentioned previously above, the tail pointer cache stores, for each tile control list being written by the geometry processing slave unit, a record of the group index (PIM number) primitive(s) most recently written to that tile control list. The geometry processing slave unit updates each tail pointer cache entry depending on whether the respective group index falls in the renderable range. If the group index falls within the renderable range, the tail pointer is invalidated (set to null). This is done because the memory allocated to renderable groups (PIMs) will be freed during the partial render. Therefore, after the partial render, pointers to these blocks of memory would no longer be valid. Meanwhile, if the group index falls outside the renderable range, then the tail pointer is left unchanged. Groups outside the renderable range will not be affected by the partial render, and the memory blocks allocated to them will remain allocated to them. The geometry processing slave unit can therefore resume writing to those tile control lists, as necessary, from the memory locations indicated by the (still valid) tail pointers.

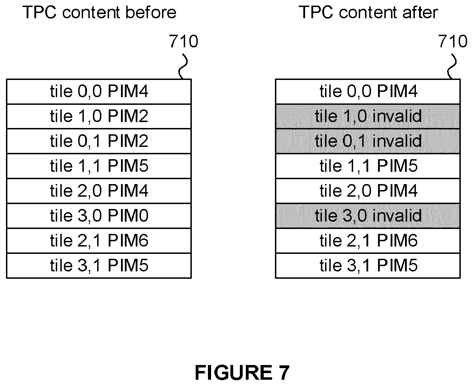

An example is illustrated in Figure 7. The table on the left shows the contents of a tail pointer cache 710 just before the system runs out of memory and geometry processing ceases. The table on the right shows the updates made by the geometry processing slave unit when it is notified of the partial render. Here, it is assumed that there is a consecutive series of PIMs 0 to 6. The renderable range is from PIM 0 to PIM 3. Note that the tail pointer cache illustrated in Figure 7 is for a core other than the core that is processing the ending group (lowest active PIM), which is PIM 3. The core whose tail pointer cache is shown has processed PIMs 0, 2, 4, and 5, and is at least part of the way through processing PIM 6. Upon receiving notification of a partial render, the geometry processing slave unit scans through the tail pointer cache and invalidates the tail pointers associated with tile 1,0, tile 0,1, and tile 3,0, because these are associated with group indices (PIM numbers 0 and 2) in the renderable range. The other tail pointers (associated with PIM numbers 4, 5, and 6) are left unchanged.

The measures described above can provide a simple and effective way for each core performing geometry processing to maintain the records that it needs to create the tile control lists. They can also provide a simple and effective way for each such core to resume geometry processing correctly after execution of a partial render. As a result of these measures, the cores (slave units) performing geometry processing require minimal information about the partial render - it is sufficient to provide the first cores with the group indices of the starting and ending group. Each core can maintain its own tile control lists and tail pointer cache independently and correctly, based on this information.

By configuring the cores (slave units) doing geometry processing and the cores (slave units) doing fragment shading in the manner explained above, they can cooperate to perform geometry processing and fragment processing in multiple parallel pipelines. This may be achieved with minimal centralised control and communication between the cores, facilitating bandwidth efficiency and scalability.

It should be understood that the examples described above, with reference to Figures 1A to 7, are exemplary - the scope of the present disclosure is not limited to these examples.

For instance, in the examples above, all of the cores 101, 111 were identical. This is not essential - different cores could be instantiated with different combinations of components. For example, some cores may be configured for, and contain hardware only for, geometry processing, while other cores may be configured for, and contain hardware only for, fragment shading.

Even if the cores are identical, it is not necessary that both geometry processing work and fragment shading work are assigned to all cores. A fragment shading master unit may choose to distribute fragment shading work to a subset of the cores, even if other cores also possess fragment shading slave units. The same is true of the geometry processing master unit and geometry processing slave units. At any given time, a given core may therefore be involved in geometry processing, or fragment shading, or both.

Cores may include local memory, forming a local cache, optionally with multiple levels. When data is read from the memory 120 by the core, it may be retained in the local cache for possible future reuse. The data may be reused by another component (for example, another slave unit, or another rasterization pipeline or processor) - that is, a component other than the component that was responsible for originally reading the data from the memory 120.

Pointers are commonly invalidated by setting them equal to zero, or "null". Of course, this is not essential. Any special value could in principle be reserved to indicate an invalid pointer, which does not point to any valid block of memory. For example, a convention could be adopted whereby a binary address consisting of all ones could denote an invalid pointer.

In the examples above, reference was made to the "lowest" active PIM - this being the active PIM having the earliest position in the original geometry sequence. In this regard, it should be understood that the term "lowest" is not limiting. Labelling the earliest active PIM as the "lowest" one depends on numbering with successively increasing PIM numbers. In an alternative implementation, the PIM numbers could be assigned such that they follow a decreasing sequence. In this alternative implementation, the earliest active PIM would be the "highest" active PIM. The preceding (completed) PIMs would have higher PIM numbers; the subsequent PIMs would have lower PIM numbers.

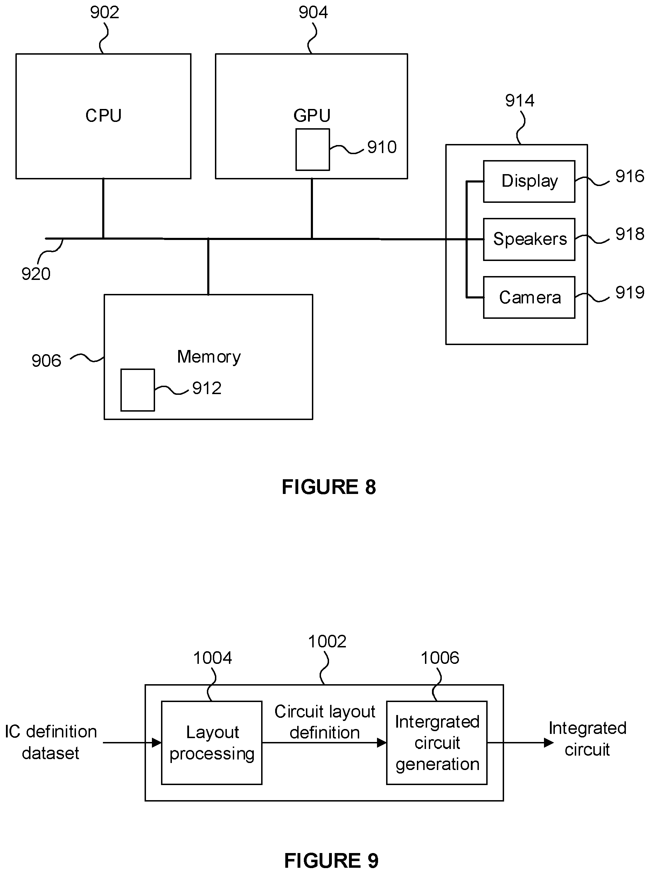

A core 101, 111, or a 3-D graphics rendering system 100, as described above, may be implemented as part of a graphics processing system. Figure 8 shows a computer system in which such a graphics processing system may be implemented. The computer system comprises a CPU 902, a GPU 904, a memory 906 and other devices 914, such as a display 916, speakers 918 and a camera 919. A processing block 910 (corresponding to the cores 101 and 111, and bus/interconnect 130) is implemented on the GPU 904. In other examples, the processing block 910 may be implemented on the CPU 902. The components of the computer system can communicate with each other via a communications bus 920. A store 912 (corresponding to memory 120) is implemented as part of the memory 906.

While Fig. 8 illustrates one implementation of a graphics processing system, it will be understood that a similar block diagram could be drawn for an artificial intelligence accelerator system - for example, by replacing either the CPU 902 or the GPU 904 with a Neural Network Accelerator (NNA), or by adding the NNA as an additional unit. In such cases, the processing block 910 can be implemented in the NNA.

The cores 101, 111 and graphics rendering system 100 of Figure 1 are shown as comprising a number of functional blocks. This is schematic only and is not intended to define a strict division between different logic elements of such entities. Each functional block may be provided in any suitable manner. It is to be understood that intermediate values described herein as being formed by a core or graphics rendering system need not be physically generated by the core or graphics rendering system at any point and may merely represent logical values which conveniently describe the processing performed by the core or graphics rendering system between its input and output.

The cores and graphics rendering systems described herein may be embodied in hardware on an integrated circuit. The cores and graphics rendering systems described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java^{®} or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a core, graphics rendering system, or graphics processing system configured to perform any of the methods described herein, or to manufacture a core, graphics rendering system, or graphics processing system comprising any apparatus described herein. An integrated circuit definition dataset may be, for example, an integrated circuit description.

Therefore, there may be provided a method of manufacturing, at an integrated circuit manufacturing system, a core, graphics rendering system, or graphics processing system as described herein. Furthermore, there may be provided an integrated circuit definition dataset that, when processed in an integrated circuit manufacturing system, causes the method of manufacturing a core, graphics rendering system, or graphics processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a core, graphics rendering system, or graphics processing system will now be described with respect to Figure 9.

Figure 9 shows an example of an integrated circuit (IC) manufacturing system 1002 which is configured to manufacture a core, graphics rendering system, or graphics processing system as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a core, graphics rendering system, or graphics processing system as described in any of the examples herein), process the IC definition dataset, and generate an IC according to the IC definition dataset (e.g. which embodies a core, graphics rendering system, or graphics processing system as described in any of the examples herein). The processing of the IC definition dataset configures the IC manufacturing system 1002 to manufacture an integrated circuit embodying a core, graphics rendering system, or graphics processing system as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a core, graphics rendering system, or graphics processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 9 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 9, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A multicore graphics rendering system (100), comprising:
a plurality of cores (101, 111), configured to implement tile-based deferred rendering of a stream of primitives,
wherein first cores of the plurality are configured to perform geometry processing work, and second cores of the plurality are configured to perform fragment processing work,
wherein each first core is configured to process groups of primitives, to produce a set of tile control lists describing, for each of a plurality of tiles, the primitives processed by that first core that are present in that tile, each group being associated with a group index, the group indices defining the ordering of the groups in the stream of primitives,
each first core being configured to write the tile control lists, including the group indices, to a memory (120),
each second core comprising at least one rasterisation pipeline (150-1, 150-2), each rasterisation pipeline comprising one or more processors (154-1, 156-1, 154-2, 156-2) configured to perform fragment processing for one or more of the tiles, wherein each rasterisation pipeline is configured to, for each tile to be processed by its one or more processors:
read from the memory (120) the tile control lists produced for that tile by the first cores; and
stitch together the tile control lists, to produce a combined tile control stream for the tile,
wherein the rasterisation pipeline stitches together the tile control lists in the order defined by the group indices.

2. The multicore graphics rendering system of claim 1, wherein the combined tile control stream for each tile is provided by the rasterisation pipeline (150-1, 150-2) directly to the one or more processors (154-1, 156-1, 154-2, 156-2).

3. The multicore graphics rendering system of claim 1 or claim 2, wherein at least one of the second cores comprises multiple rasterisation pipelines (150-1, 150-2), and/or
wherein at least one of the rasterisation pipelines (150-1, 150-2) comprises multiple processors (154-1, 156-1, 154-2, 156-2).

4. The multicore graphics rendering system of any one of the preceding claims, wherein one of the first cores comprises a geometry processing master unit (104), configured to split the stream of primitives into the groups of primitives, and assign the groups of primitives among the first cores, and/or
wherein each of the first cores comprises a geometry processing slave unit (105, 115), configured to control the processing of the groups of primitives assigned to that core, to produce the respective set of tile control lists

5. The multicore graphics rendering system of any one of the preceding claims, wherein one of the second cores comprises a fragment shading master unit (106), configured to assign the tiles among the second cores.

6. The multicore graphics rendering system of any one of the preceding claims, wherein each of the second cores comprises a fragment shading slave unit (107, 117), configured to control the fragment processing for the tiles assigned to that core.

7. The multicore graphics rendering system of any one of the preceding claims, wherein the second cores are configured to execute a partial render, comprising performing fragment processing for primitives in a renderable range of groups, the renderable range starting with a starting group and ending with an ending group, wherein, before executing the partial render, geometry processing has been completed for every group ahead of the ending group in the ordering,
optionally wherein:
the primitives are described in primitive block data stored in the memory;
the tile control lists contain pointers to the primitive block data, and
the graphics rendering system is configured to free memory associated with portions of tile control lists and primitive block data that have been rendered in the partial render.

8. The multicore graphics rendering system of any one of the preceding claims,
wherein each first core maintains, for each tile control list that it produces:
a head pointer, indicating the start of the tile control list; and
a tail pointer, indicating the location in memory where the first core should continue writing the tile control list if it encounters a primitive that belongs in the respective tile,
wherein each first core further maintains, for each tile control list, a record of the group index of the primitive last written by the core to the tile control list,
optionally wherein, if the first core encounters a primitive that belongs in a given tile, and the first core determines that the tail pointer for the respective tile control list is invalid, then the first core is configured to:
request a memory allocation for that tile control list;
receive a first address of a first portion of memory allocated in response to the request; and
update the head pointer to point to said first address.
further optionally wherein, if the first core encounters a primitive that belongs in a given tile, and the first core determines that the group index of said primitive differs from the group index last written to the respective tile control list, then the first core is configured to:
request a memory allocation for that tile control list;
receive a second address of a second portion of memory allocated in response to the request; and
write, to the memory location indicated by the tail pointer, a pointer to the second address.

9. The multicore graphics rendering system of claim 8,
wherein the second cores are configured to execute a partial render, comprising performing fragment processing for primitives in a renderable range of groups, the renderable range starting with a starting group and ending with an ending group, wherein, before executing the partial render, geometry processing has been completed for every group ahead of the ending group in the ordering,
wherein, upon execution of the partial render, each first core updates its tail pointers based on a comparison of its group index records with the renderable range of groups rendered in the partial render,
optionally wherein, upon execution of the partial render, if a tail pointer is associated with a group index in the renderable range, the first core is configured to invalidate said tail pointer.

10. The multicore graphics rendering system of any one of the preceding claims, wherein each tile control list has an associated head pointer, pointing to the start of the tile control list,
wherein each rasterisation pipeline (150-1, 150-2) of each second core is configured to read, from the memory location indicated by the head pointer, a portion of the respective tile control list,
optionally wherein each tile control list comprises a linked series of portions, each portion including:
data associated with a set of primitives;
if the set of primitives belongs to a different group from the preceding portion of the tile control list, an indication of the group index of the primitives in that portion; and
a pointer to the next portion;
wherein, when stitching together the tile control lists, each rasterisation pipeline (150-1, 150-2) of each second core is configured to remove the group indices and the pointers.

11. The multicore graphics rendering system of claim 10, wherein, when stitching together the tile control lists, each rasterisation pipeline (150-1, 150-2) is configured to read from the tile control list associated with the earliest group index, and to append data read from that tile control list to the combined tile control stream.

12. The multicore graphics rendering system of any one of claims 10 to 11 wherein each rasterisation pipeline (150-1, 150-2) is configured to:
obtain an indication of a renderable range of groups, defined by a starting group and an ending group;
maintain a record of the head pointer for each tile control list, for each tile it has been assigned to process; and
when it reaches the end of a particular tile control list:
update the head pointer of that particular tile control list with a null value; and
if the last group index encountered by the rasterisation pipeline in that particular tile control list is the group index of the ending group of the renderable range, stop stitching, and update the head pointers of the other tile control lists to point to the earliest unrenderable group in the respective tile control lists.

13. A method of manufacturing, using an integrated circuit manufacturing system, a graphics processing system comprising the multicore graphics rendering system of any one of claims 1 to 12 and a memory.

14. An integrated circuit definition dataset that, when processed in an integrated circuit manufacturing system, configures the integrated circuit manufacturing system to manufacture a graphics processing system comprising the multicore graphics rendering system of any one of claims 1 to 12 and a memory.

15. An integrated circuit manufacturing system configured to manufacture a graphics processing system comprising the multicore graphics rendering system of any one of claims 1 to 12 and a memory.
